# EUROPEAN PATENT SPECIFICATION

(11) **EP 4 195 035 B1**
(45) Date of publication and mention of the grant of the patent: **13.11.2024**
(21) Application number: 22203132.0
(22) Date of filing: 21.10.2022
(51) Int. Cl.: G06F 8/75, G06F 11/30, G06F 11/34, G06F 11/36

(54) **PERFORMANCE ENHANCEMENT FOR APPLICATION DEVELOPMENT UTILIZING SMART RUNTIME ANALYZER AND ADVISOR**
LEISTUNGSVERBESSERUNG FÜR ANWENDUNGSENTWICKLUNG UNTER VERWENDUNG EINES INTELLIGENTEN LAUFZEITANALYSATORS UND BERATERS
AMÉLIORATION DE PERFORMANCE POUR DÉVELOPPEMENT D'APPLICATION À L'AIDE D'ANALYSEUR INTELLIGENT D'EXÉCUTION ET D'UN CONSEILLER

(30) Priority: 09.12.2021 US 202117547085
(43) Date of publication of application: 14.06.2023
(73) Proprietor: Intel Corporation, Santa Clara, CA 95054 (US)
(72) Inventor: S, Amrita H, 560111 Bangalore (IN)
(74) Representative: Rummler, Felix

(56) References cited:
- US-A1- 2015 269 052
- US-A1- 2016 092 336
- US-A1- 2021 263 713
- US-B1- 10 423 514

## Description

### TECHNICAL FIELD

This disclosure generally relates to the field of computing devices and, more particularly, improvement of performance of developed applications using a smart runtime analyzer and advisor.

### BACKGROUND

Developers of applications on the Android^{™} operating system are strongly competing to reduce power and run applications as efficiently as possible, while enhancing application performance. Various compilers, tools, and optimizers have been developed to help build applications with high-performance and low-energy profiles. However, much amount of information remains untapped in the Android Runtime Architecture (RTA) Layer.

US 2016/092336 A1 discloses computer-implemented methods, software, and systems, including methods for generating code visualizations including code analysis. Further, D1 discloses methods for gathering and analyzing runtime information that may be generated during code debugging.

US 10 423 514 B1 discloses techniques for automated classification of mobile applications battery consumption using simulations. The simulations are performed using a dynamic analyzer implemented as an instrumented Android emulator.

US 2021/263713 Aldiscloses systems and methods for optimizing parameters of systems. The disclosed systems and methods involve a process for adapting "programming models" to achieve a desired behavior such as portability or to better utilize available resources.

US 2015/269052 A1 discloses methods to support performance analysis. These methods include compiling a program and embedding in the program performance profiling functionalities.

### BRIEF DESCRIPTION OF THE DRAWINGS

Embodiments described here are illustrated by way of example, and not by way of limitation, in the figures of the accompanying drawings in which like reference numerals refer to similar elements.
**FIG. 1** illustrates a runtime analyzer and advisor tool for application development, according to some embodiments;
**FIG. 2** is an illustration of a smart runtime analyzer and advisor system, according to some embodiments;
**FIG. 3A** illustrates runtime analyzer and advisor based development workflow, according to some embodiments;
**FIG. 3B** illustrates runtime layer elements that are accessed by a smart runtime analyzer and advisor system, according to some embodiments;
**FIG. 3C** illustrates diagnostics and advisory based recompilation, according to some embodiments;
**FIG. 4** is an illustration of diagnostic collection through a runtime analyzer and advisor application, according to some embodiments;
**FIG. 5** is an illustration of diagnostics and advisory information generated by a runtime analyzer and advisor system, according to some embodiments;
**FIG. 6** is a flowchart to illustrate a process for providing diagnostics and advisory information in application development, according to some embodiments;
**FIG. 7** illustrates an exemplary computing architecture for operations including smart runtime analysis and advisory operation, according to some embodiments;
**FIG. 8** is a block diagram of an example processor platform structured to execute the machine readable instructions or operations, according to some embodiments;
**FIG. 9** is a block diagram of an example implementation of processor circuitry; and
**FIG. 10** is a block diagram illustrating an example software distribution platform.

### DETAILED DESCRIPTION

Embodiments described herein are directed to improvement of performance of developed applications using a smart runtime analyzer and advisor.

In conventional development of applications including Android applications (Android referring to the Android operating system for mobile and other devices), there are known tools and optimizers to assist in building applications. These tools may be applied to improve performance and reduce energy consumption in Android applications. For example, Profile Guided Optimization (PGO) is a well-known profile-based compiler optimization technique.

However, tools such as PGO focus on optimizing an application by generating optimized code based on sample data set for the application. PGO is ignorant about information that is present in the RTA (Android Runtime Architecture) layer. Android Runtime (ART) is an application runtime environment used by the Android operating system.

While the RTA may be utilized in enterprise platforms and operating environments, embedded systems and low-energy edge-computing devices such as smartphones based on Android have different characteristics and requirements, and thus enterprise solutions generally do not provide adequate results.

In some embodiments, a diagnostics and advisory tool is provided to intelligently process the internal runtime information, including symbol attributes, segment properties, and many more, available in the Executable and Linkable Format (ELF) portion (a binary object file) of the Android Runtime Layer, to produce impactful diagnostics. The ELF and the related ABI (Application Binary Interface) aspects of the ART are referred to herein as the "ART Layer". Technology to utilize such information is not present in the Android platform, and providing a solution to apply the runtime information can significantly augment the capabilities of application developers and library vendors on Android to achieve higher levels of performance and lower energy profiles.

In some embodiments, an application development tool includes both a static component for the development of an application utilizing internal runtime information, and a dynamic component to allow a developer to receive optional feedback from users.

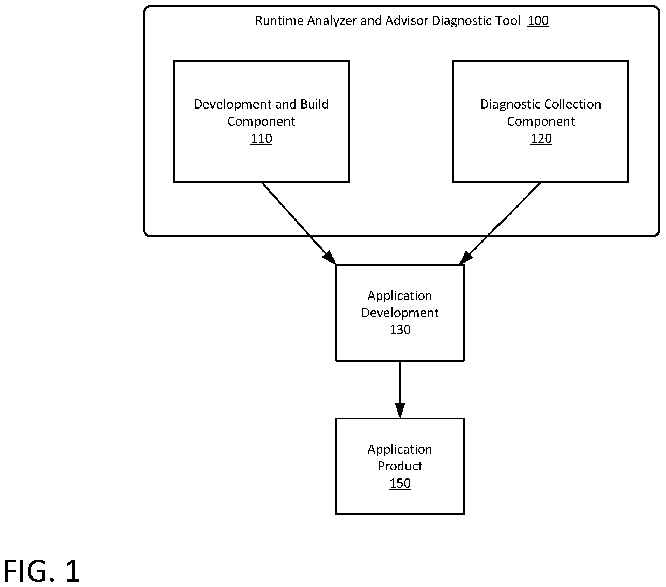

**FIG. 1** illustrates a runtime analyzer and advisor tool for application development, according to some embodiments. In some embodiments, a runtime analyzer and advisor diagnostic tool 100 includes a first component referred to as development and build component 110 in which diagnostics and advisory based performance improvements are provided in a development and build phase of product development.

The diagnostic tool 100 further includes a second component referred to as a diagnostic collection component 120. In the diagnostic collection component 120 additional diagnostics (beyond the diagnostics provided in the development and build component 110) can be collected from users who opt-in to participate in a user-experience-improvement-program, by installing a smart runtime analyzer and advisor (referred to herein as Smartan) Android app.

In some embodiments, the diagnostic tool 100 (which may be referred to as the Smartan tool) processes the raw information regarding an application available in the ELF portion (binary object file) of the ART, wherein the raw information may include:
(a) Relocation information;
(b) Symbol attributes and references;
(c) Section and segment properties; and
(d) Dynamic section tags; and
(e) Other runtime data.

In some embodiments, the diagnostic tool 100 may further combine the information from the ELF with other runtime data (one or more other runtime artefacts, such as a call-graph (referring to a control-flow graph representing relationships in a program)), to produce meaningful and impactful diagnostics.

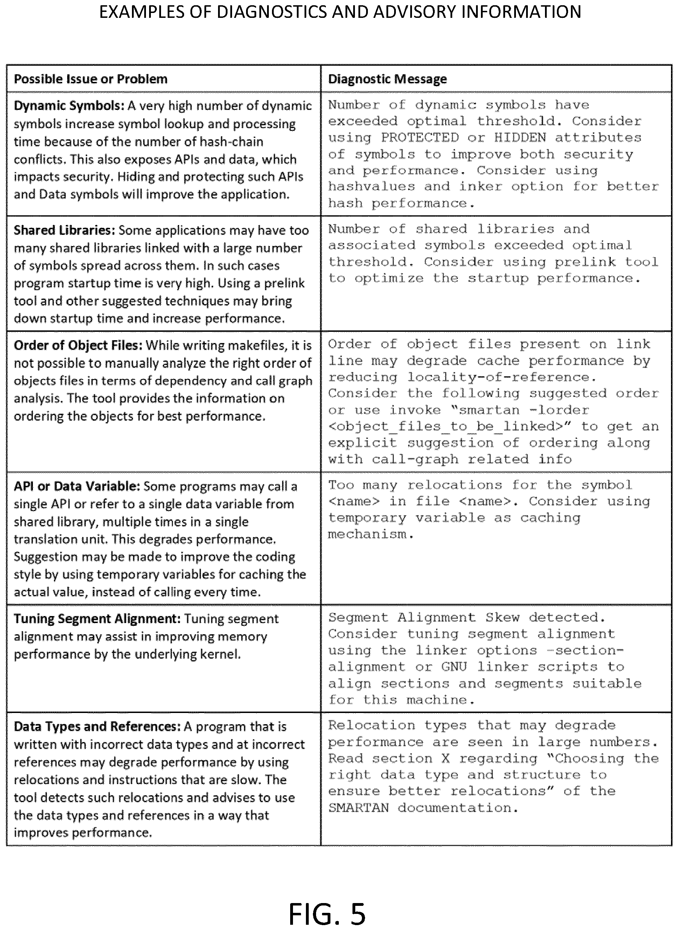

In some embodiments, the tool may obtain the raw information from the ELF in two ways:
(1) Utilizing the development and build component 110: Raw data is obtained statically by reading the binary object file (ELF on Android) that is built on disk. However, certain information from the binary object file may not be available when the application executable is not being run.
(2) Utilizing the diagnostic collection component 120: To obtain additional information, such as symbols accessed dynamically using the dlsym (Dynamic Library Symbol) API, the runtime actual memory usage, and other related runtime info, the diagnostic tool 100 also reads the in-memory binary object file segments and library details. The additional information may be obtained via a daemon running on user systems (such as daemon 576 illustrated in FIG. 5), if operation of the daemon is permitted (opted into) by the user.

The development and build component 110 and the diagnostic collection component 120 may be utilized jointly in application development 130 to generate an application product 150.

In some embodiments, the runtime analyzer and advisor tool 100 may be utilized to tap the potential of ART Layer information to provide crucial diagnostics and advisory information that is currently not readily available in the ART layer. The tool is to process raw information from the binary object file, combined with other runtime artifacts, and then produce resulting diagnostics for a developer. In a particular implementation, by default the tool may generate output to a standard output. However, several other developer friendly options are also available, such as storing data in a database that can later be used to compare and measure progress, storing output in a plain text file, or other similar output.

Once the diagnostics are generated, a developer may use these or refer to accompanying documentation regarding possible solutions for fixing runtime issues, programming constructs, or incorrect options, that are detected by the tool, and rebuild the application accordingly.

In addition to a static development phase, the invention also provides an Android system service (through a installed daemon on user devices) to enable an application to analyze additional dynamic runtime aspects that could not be analyzed during the static development phase. In some embodiments, this is an optional feature that users may choose to opt into as part of a user experience improvement program to assist developer in improving applications. For example, an Android app developer, making use of the runtime analyzer and advisor tool for development, may provide a link to the Smartan app in their app. Users can then install the app for the runtime analyzer and advisor tool on their device and enable monitoring. If a user has multiple apps that support the runtime analyzer and advisor tool app, the user may selectively enable only those apps that the user wants to opt-in for.

The dynamic runtime aspects that are captured by the runtime analyzer and advisor tool app may include, but are not limited to:
(1) Flame-graphs (providing a visualization of diagnostic data) for better understanding of the application runtime behavior.
(2) Meminfo (displaying current memory usage) to understand the memory usage and fragmentation during execution.
(3) Insights about dynamic shared libraries dlopen'ed (referring to a function for opening a dynamic link library) by the application, such as the relocations that can be cached, memory segments that can be merged for better cache management, and others.

In some implementations the daemon functionality provided by the runtime analyzer and advisor tool app may be provided by default on an Android stack (such as, for example, the Intel Celadon Stack) as an option (such as under the name SmartanDiag in a particular instance) under Developer Options. In this manner, users can opt-in by turning ON the option and selecting the apps to be monitored as required.

In some embodiments, the runtime analyzer and advisor tool app, in addition to such runtime analysis, may also provide dynamic optimization and performance boost by tuning certain Android kernel parameters (e.g., hugepagesz (a page size parameter), etc.) to optimum values, for those applications selected by the user, without affecting performance of any other apps on the device.

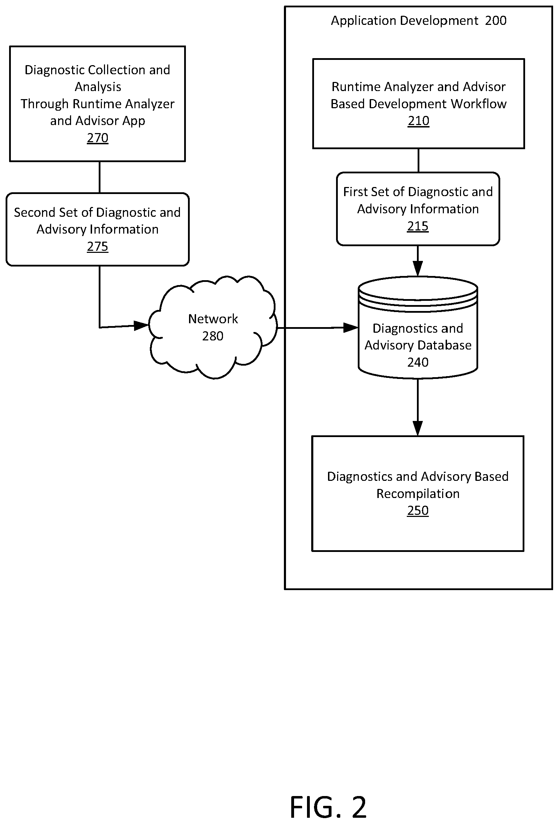

**FIG. 2** is an illustration of a smart runtime analyzer and advisor system, according to some embodiments. In some embodiments, application development 200 includes operation of a runtime analyzer and advisor based workflow 210 in the development of a particular application to generate a first set of diagnostics and advisory information 215, the information being provided to, for example, a diagnostics and advisory database 240. The first set of diagnostics and advisory information 215 is generated based upon raw data that is read from the binary object file (ELF on Android) that is built on disk. The first set of diagnostics and advisory information 215 may be referred to as static diagnostics and advisory information as these are developed in the initial development of the application. The first set of diagnostics and advisory information is generated through analysis of the internal runtime information in the ELF portion of the Android Runtime Layer.

In some embodiments, the smart runtime analyzer and advisor system further includes receipt of data from diagnostic collection through operation of a runtime analyzer and advisor app 270, wherein the runtime analyzer and advisor app is run on one or more user systems upon a respective user opting into the optional operation of the app. The diagnostic collection through operation of the runtime analyzer and advisor app 270 is to generate a second set of diagnostics and advisory information 275, which may be referred to as dynamic diagnostics and advisory information as these are developed in the active user operation of the application. The second set of diagnostics and advisory information 275 is generated based upon reading in-memory ELF segments and library details, and may include symbols accessed dynamically, the runtime actual memory usage, and other related runtime info.

The second set of diagnostics and advisory information may be received via a network 280 (such as the Internet), with the generated information being provided to, for example, the diagnostics and advisory database 240.

The stored information in the diagnostics and advisory database 240 then is available for the developer for diagnostics and advisory based recompilation of the application 250.

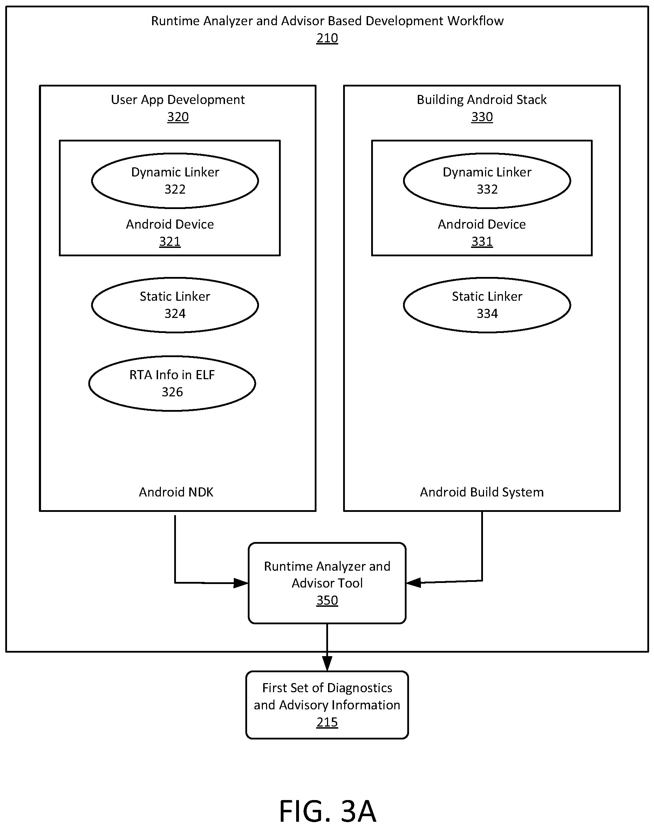

**FIG. 3A** illustrates runtime analyzer and advisor based development workflow, according to some embodiments. The runtime analyzer and advisor based development workflow 210, as illustrated in FIG. 2, may include user application development 320, relating to development of the Android application for user operation in the Android NDK (Native Development Kit), and building the Android stack 330, as performed in the Android build system.

The user app development 320 may include dynamic linker operation 322 from Android device operation 321 (to load dynamic libraries) and static linker operation 324 (to load static libraries). In some embodiments, the user app development further includes RTA information in the ELF 326, which is information that is not conventionally available for app development. The building of the Android stack also includes dynamic linker operation 332 from Android device operation 331 and static linker operation 334.

In some embodiments, the output from the user app development 320 and the building of the Android stack 330 are received by a runtime analyzer and advisor tool 350, which generates the first set of diagnostics and advisory information 215, as illustrated in FIG. 2.

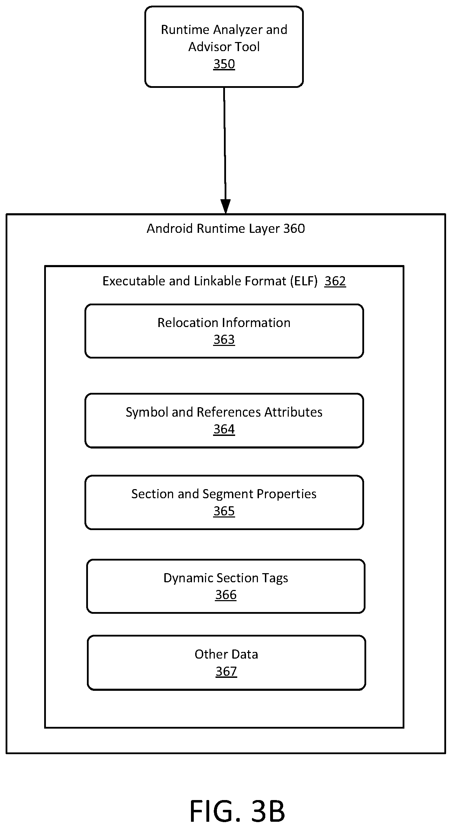

**FIG. 3B** illustrates runtime layer elements that are accessed by a smart runtime analyzer and advisor system, according to some embodiments. In some embodiments, the runtime analyzer and advisor tool 350 is to access the executable and linkable format (ELF) 362 of the Android runtime layer 360. The elements of the ELF that are accessed may include, but are not limited to:
Relocation Information 363;
Symbol Attributes and References 364;
Section and Segment Properties 365;
Dynamic Section Tags 366; and
Other Runtime Data 367.

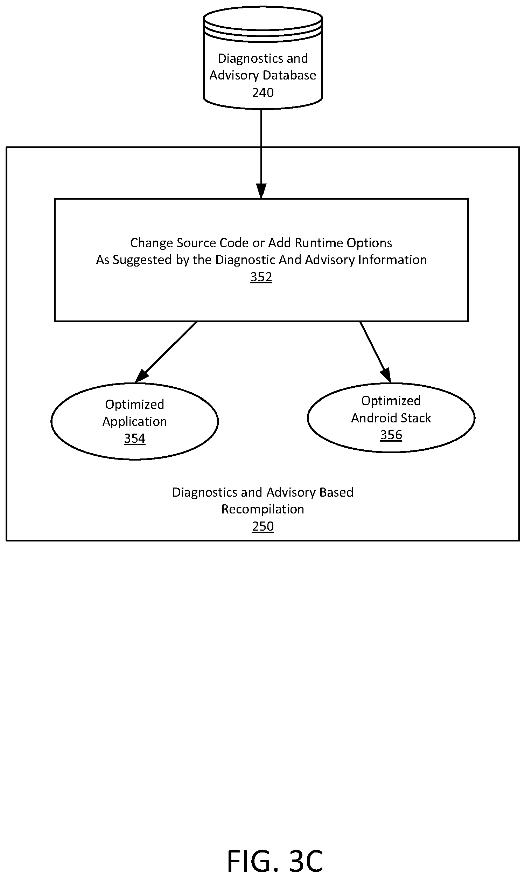

**FIG. 3C** illustrates diagnostics and advisory based recompilation, according to some embodiments. The diagnostics and advisory based recompilation 250 is based at least in part on data from the diagnostics and advisory database 240, as illustrated in FIG. 2.

In some embodiments, the recompilation 250 may include changing source code or adding runtime options as suggested by the diagnostic and advisory information 352, which information may include both the first set of diagnostics and advisory information generated through analysis of the internal runtime information in the ELF portion of the Android Runtime Layer and the second set of diagnostics and advisory information developed in the user operation of the relevant application. The operation of the diagnostics and advisory based recompilation 250 allows for generation of an optimized application 354 and generation of an optimized Android stack 356 utilizing the processing of the internal runtime information in the Android Runtime Layer.

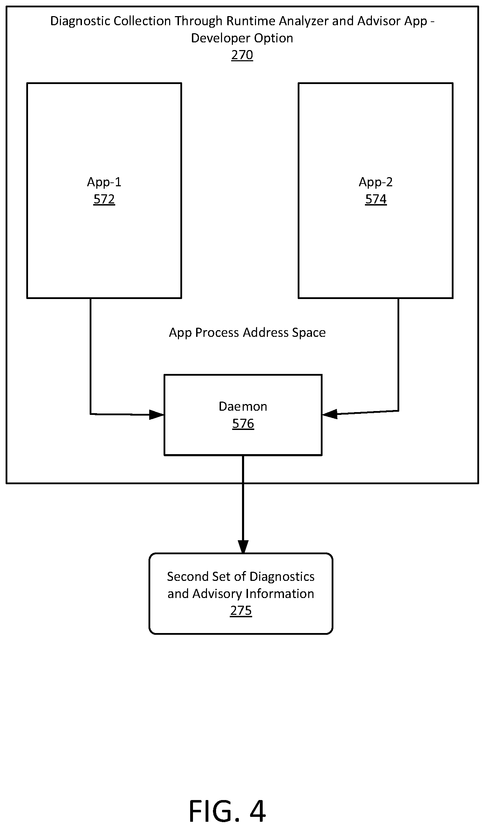

**FIG. 4** is an illustration of diagnostic collection through a runtime analyzer and advisor application, according to some examples. Diagnostic collection through operation of a runtime analyzer and advisor app 270, as illustrated in FIG. 2, includes operation of a daemon 576 runtime analyzer and advisor application to collect diagnostic information from one or more applications, shown as App-1 572 and App-2 574, in an app process address space during operation on a user system.

In some embodiments, the collection of data may be a developer option, and further may only occur if the user has opted into the data collection process. In some embodiments, a user having more than one eligible application may select which application or applications to opt into the data collection process, such as the user opting in either or both of App-1 572 and App-2 574 as illustrated in FIG. 4. The operation of the runtime analyzer and advisor app 270 is to generate the second set of diagnostics and advisory information 275, referred to as the dynamic diagnostics and advisory information, for either or both of App-1 572 and App-2 574.

**FIG. 5** is an illustration of diagnostics and advisory information generated by a runtime analyzer and advisor system, according to some embodiments. As illustrated in FIG. 5, possible issues or problems that may be identified by the runtime analyzer and advisor system may include, but are not limited to, the following:
(a) Detection of a large number of dynamic symbols.
(b) Excessive shared libraries and associated symbols.
(c) Order of object files that may degrade cache performance.
(d) Use of single API or data variable resulting in excessive relocations.
(e) Detection of segment alignment skew.
(f) Incorrect data types and incorrect references.

In each case, the runtime analyzer and advisor system is to provide a diagnostic message identifying the detected problem, and providing advisory information to assist a developer in addressing the identified problem.

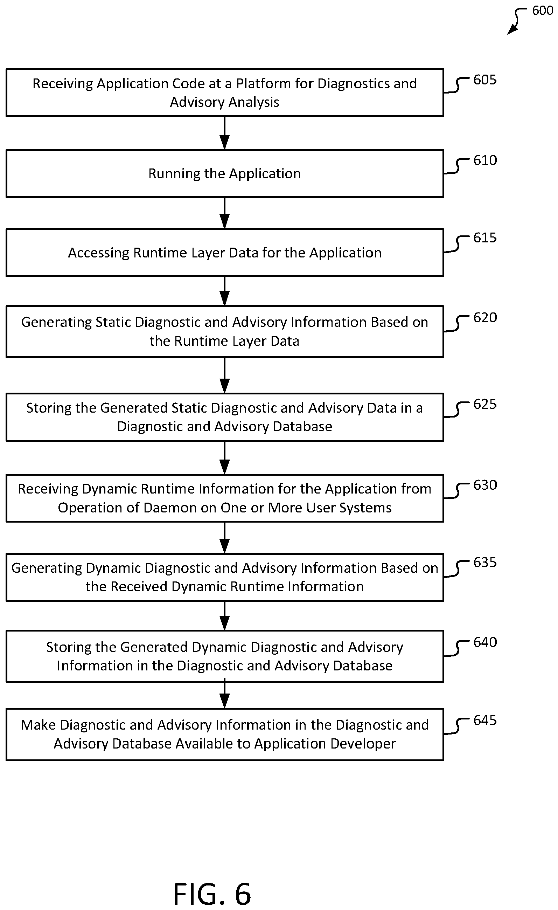

**FIG. 6** is a flowchart to illustrate a process for providing diagnostics and advisory information in application development, according to some embodiments. In a diagnostics and advisory process 600, code for an application (such as an Android application) is received at a platform for diagnostics and advisory analysis 605. In the analysis, the application is run 610 and runtime layer data for the application is accessed 615. In some embodiments, static diagnostic and advisory information is generated based on the runtime layer data 620. The generated static diagnostic and advisory information may then be stored in a diagnostic and advisory database 625.

In some embodiments, the process 600 further includes dynamic runtime information for the application from operation of a daemon on one or more user systems 630. Dynamic diagnostic and advisory information is generated based on the received dynamic runtime information 635. The generated dynamic diagnostic and advisory information may then be stored in the diagnostic and advisory database 640.

In some embodiments, the stored diagnostic and advisory information stored in the diagnostic and advisory database may be made available to the application developer 645, thus enabling development and improvement of the application and the software stack. The information provided to the developer may include, but is not limited to, diagnostics and advisory information as illustrated in FIG. 5.

The flowchart illustrated in FIG. 6 may include machine readable instructions for a program for execution by processor circuitry. The program may be embodied in software stored on one or more non-transitory computer readable storage media such as a CD (Compact Disk) or DVD (Digital Video Disk), a hard disk drive (HDD), a solid state drive (SSD), a volatile memory (e.g., Random Access Memory (RAM) of any type, etc.), or a non-volatile memory (e.g., FLASH memory, an HDD (Hard Disk Drive), etc.) associated with processor circuitry located in one or more hardware devices. The program or parts thereof may alternatively be executed by one or more hardware devices other than the processor circuitry and/or embodied in firmware or dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a user) or an intermediate client hardware device (e.g., a radio access network (RAN) gateway that may facilitate communication between a server and an endpoint client hardware device). Similarly, the non-transitory computer readable storage media may include one or more mediums located in one or more hardware devices. Although the example program is described with reference to the flowchart illustrated in FIG. 6, many other methods of implementing may alternatively be used. For example, the order of execution of the blocks may be changed, and/or some of the blocks described may be changed, eliminated, or combined. Additionally or alternatively, any or all of the blocks may be implemented by one or more hardware circuits (e.g., processor circuitry, discrete and/or integrated analog and/or digital circuitry, an FPGA (Field-Programmable Gate Array), an ASIC (Application-Specific Integrated Circuit), a comparator, an operational-amplifier (op-amp), a logic circuit, etc.) structured to perform the corresponding operation without executing software or firmware. The processor circuitry may be distributed in different network locations and/or local to one or more hardware devices (e.g., a single-core processor (e.g., a single core central processor unit (CPU)), a multi-core processor (e.g., a multi-core CPU), etc.) in a single machine, multiple processors distributed across multiple servers of a server rack, multiple processors distributed across one or more server racks, a CPU and/or a FPGA located in the same package (e.g., the same integrated circuit (IC) package or in two or more separate housings, etc.).

The machine readable instructions described herein may be stored in one or more of a compressed format, an encrypted format, a fragmented format, a compiled format, an executable format, a packaged format, etc. Machine readable instructions as described herein may be stored as data or a data structure (e.g., as portions of instructions, code, representations of code, etc.) that may be utilized to create, manufacture, and/or produce machine executable instructions. For example, the machine readable instructions may be fragmented and stored on one or more storage devices and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of machine executable instructions that implement one or more operations that may together form a program such as that described herein.

In another example, the machine readable instructions may be stored in a state in which they may be read by processor circuitry, but require addition of a library (e.g., a dynamic link library (DLL)), a software development kit (SDK), an application programming interface (API), etc., in order to execute the machine readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable media, as used herein, may include machine readable instructions and/or program(s) regardless of the particular format or state of the machine readable instructions and/or program(s) when stored or otherwise at rest or in transit.

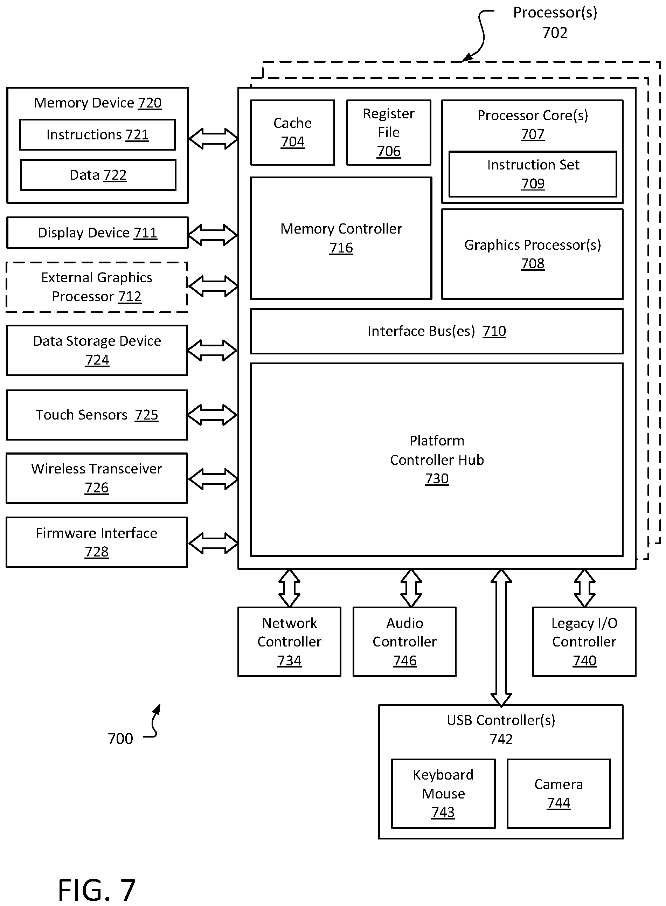

**FIG. 7** illustrates an embodiment of an exemplary computing architecture for operations including smart runtime analysis and advisory operation, according to some embodiments. In various embodiments as described above, a computing architecture 700 may comprise or be implemented as part of an electronic device.

In some embodiments, the computing architecture 700 may be representative, for example, of a computer system that implements one or more components of the operating environments described above. The computing architecture 700 may be utilized to provide smart runtime analysis and advisory operation, such as described in FIGS. 1-6.

As used in this application, the terms "system" and "component" and "module" are intended to refer to a computer-related entity, either hardware, a combination of hardware and software, software, or software in execution, examples of which are provided by the exemplary computing architecture 700. For example, a component can be, but is not limited to being, a process running on a processor, a processor, a hard disk drive or solid state drive (SSD), multiple storage drives (of optical and/or magnetic storage medium), an object, an executable, a thread of execution, a program, and/or a computer. By way of illustration, both an application running on a server and the server can be a component. One or more components can reside within a process and/or thread of execution, and a component can be localized on one computer and/or distributed between two or more computers. Further, components may be communicatively coupled to each other by various types of communications media to coordinate operations. The coordination may involve the unidirectional or bi-directional exchange of information. For instance, the components may communicate information in the form of signals communicated over the communications media. The information can be implemented as signals allocated to various signal lines. In such allocations, each message is a signal. Further embodiments, however, may alternatively employ data messages. Such data messages may be sent across various connections. Exemplary connections include parallel interfaces, serial interfaces, and bus interfaces.

The computing architecture 700 includes various common computing elements, such as one or more processors, multi-core processors, co-processors, memory units, chipsets, controllers, peripherals, interfaces, oscillators, timing devices, video cards, audio cards, multimedia input/output (I/O) components, power supplies, and so forth. The embodiments, however, are not limited to implementation by the computing architecture 700.

As shown in FIG. 7, the computing architecture 700 includes one or more processors 702 and one or more graphics processors 708, and may be a single processor desktop system, a multiprocessor workstation system, or a server system having a large number of processors 702 or processor cores 707. In one embodiment, the system 700 is a processing platform incorporated within a system-on-a-chip (SoC or SOC) integrated circuit for use in mobile, handheld, or embedded devices.

An embodiment of system 700 can include, or be incorporated within, a server-based gaming platform, a game console, including a game and media console, a mobile gaming console, a handheld game console, or an online game console. In some embodiments system 700 is a mobile phone, smart phone, tablet computing device or mobile Internet device. Data processing system 700 can also include, couple with, or be integrated within a wearable device, such as a smart watch wearable device, smart eyewear device, augmented reality device, or virtual reality device. In some embodiments, data processing system 700 is a television or set top box device having one or more processors 702 and a graphical interface generated by one or more graphics processors 708.

In some embodiments, the one or more processors 702 each include one or more processor cores 707 to process instructions which, when executed, perform operations for system and user software. In some embodiments, each of the one or more processor cores 707 is configured to process a specific instruction set 709. In some embodiments, instruction set 709 may facilitate Complex Instruction Set Computing (CISC), Reduced Instruction Set Computing (RISC), or computing via a Very Long Instruction Word (VLIW). Multiple processor cores 707 may each process a different instruction set 709, which may include instructions to facilitate the emulation of other instruction sets. Processor core 707 may also include other processing devices, such a Digital Signal Processor (DSP).

In some embodiments, the processor 702 includes cache memory 704. Depending on the architecture, the processor 702 can have a single internal cache or multiple levels of internal cache. In some embodiments, the cache memory 704 is shared among various components of the processor 702. In some embodiments, the processor 702 also uses an external cache (e.g., a Level-3 (L3) cache or Last Level Cache (LLC)) (not shown), which may be shared among processor cores 707 using known cache coherency techniques. A register file 706 is additionally included in processor 702 which may include different types of registers for storing different types of data (e.g., integer registers, floating point registers, status registers, and an instruction pointer register). Some registers may be general-purpose registers, while other registers may be specific to the design of the processor 702.

In some embodiments, one or more processor(s) 702 are coupled with one or more interface bus(es) 710 to transmit communication signals such as address, data, or control signals between processor 702 and other components in the system. The interface bus 710, in one embodiment, can be a processor bus, such as a version of the Direct Media Interface (DMI) bus. However, processor buses are not limited to the DMI bus, and may include one or more Peripheral Component Interconnect buses (e.g., PCI, PCI Express), memory buses, or other types of interface buses. In one embodiment the processor(s) 702 include an integrated memory controller 716 and a platform controller hub 730. The memory controller 716 facilitates communication between a memory device and other components of the system 700, while the platform controller hub (PCH) 730 provides connections to I/O devices via a local I/O bus.

Memory device 720 can be a dynamic random-access memory (DRAM) device, a static random-access memory (SRAM) device, non-volatile memory device such as flash memory device or phase-change memory device, or some other memory device having suitable performance to serve as process memory. Memory device 720 may further include non-volatile memory elements for storage of firmware. In one embodiment the memory device 720 can operate as system memory for the system 700, to store data 722 and instructions 721 for use when the one or more processors 702 execute an application or process. Memory controller hub 716 also couples with an optional external graphics processor 712, which may communicate with the one or more graphics processors 708 in processors 702 to perform graphics and media operations. In some embodiments a display device 711 can connect to the processor(s) 702. The display device 711 can be one or more of an internal display device, as in a mobile electronic device or a laptop device, or an external display device attached via a display interface (e.g., DisplayPort, etc.). In one embodiment the display device 711 can be a head mounted display (HMD) such as a stereoscopic display device for use in virtual reality (VR) applications or augmented reality (AR) applications.

In some embodiments the platform controller hub 730 enables peripherals to connect to memory device 720 and processor 702 via a high-speed I/O bus. The I/O peripherals include, but are not limited to, an audio controller 746, a network controller 734, a firmware interface 728, a wireless transceiver 726, touch sensors 725, a data storage device 724 (e.g., hard disk drive, flash memory, etc.). The data storage device 724 can connect via a storage interface (e.g., SATA (Serial Advanced Technology Attachment)) or via a peripheral bus, such as a Peripheral Component Interconnect bus (e.g., PCI, PCI Express). The touch sensors 725 can include touch screen sensors, pressure sensors, or fingerprint sensors. The wireless transceiver 726 can be a Wi-Fi transceiver, a Bluetooth transceiver, or a mobile network transceiver such as a 3G, 4G, Long Term Evolution (LTE), or 5G transceiver. The firmware interface 728 enables communication with system firmware, and can be, for example, a unified extensible firmware interface (UEFI). The network controller 734 can enable a network connection to a wired network. In some embodiments, a high-performance network controller (not shown) couples with the interface bus 710. The audio controller 746, in one embodiment, is a multi-channel high definition audio controller. In one embodiment the system 700 includes an optional legacy I/O controller 740 for coupling legacy (e.g., Personal System 2 (PS/2)) devices to the system. The platform controller hub 730 can also connect to one or more Universal Serial Bus (USB) controllers 742 connect input devices, such as keyboard and mouse 743 combinations, a camera 744, or other USB input devices.

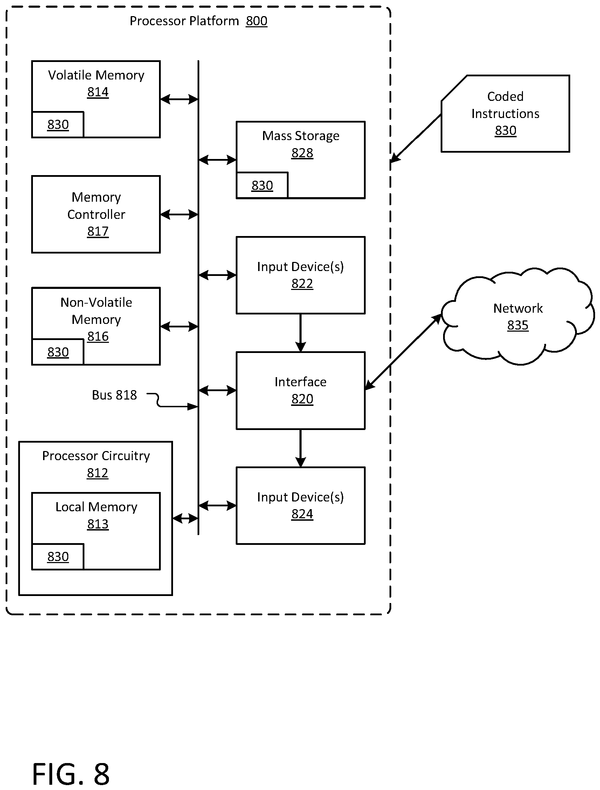

**FIG. 8** is a block diagram of an example processor platform structured to execute the machine readable instructions or operations, according to some embodiments. As illustrated, a processor platform 800 can be, for example, a server, a personal computer, a workstation, a self-learning machine (e.g., a neural network), a mobile device (e.g., a cell phone, a smart phone, or a tablet), an Internet appliance, a DVD player, a CD player, a digital video recorder, a Blu-ray player, a gaming console, a personal video recorder, a set top box, a headset (e.g., an augmented reality (AR) headset, a virtual reality (VR) headset, etc.) or other wearable device, or any other type of computing device.

The processor platform 800 of the illustrated example includes processor circuitry 812. The processor circuitry 812 of the illustrated example is hardware. For example, the processor circuitry 812 can be implemented by one or more integrated circuits, logic circuits, FPGAs microprocessors, CPUs, GPUs (Graphics Processing Units), DSPs, and/or microcontrollers from any desired family or manufacturer. The processor circuitry 812 may be implemented by one or more semiconductor based (e.g., silicon based) devices.

The processor circuitry 812 of the illustrated example includes a local memory 813 (e.g., a cache, registers, etc.). The processor circuitry 812 of the illustrated example is in communication with a main memory including a volatile memory 814 and a non-volatile memory 816 by a bus 818. The volatile memory 814 may be implemented by Synchronous Dynamic Random Access Memory (SDRAM), Dynamic Random Access Memory (DRAM), Dynamic Random Access Memory, and/or any other type of RAM device. The non-volatile memory 816 may be implemented by flash memory and/or any other desired type of memory device. Access to the main memory 814, 816 of the illustrated example is controlled by a memory controller 817.

The processor platform 800 of the illustrated example also includes interface circuitry 820. The interface circuitry 820 may be implemented by hardware in accordance with any type of interface standard, such as an Ethernet interface, a universal serial bus (USB) interface, a Bluetooth^{®} interface, a near field communication (NFC) interface, a PCI interface, and/or a PCIe interface.

In the illustrated example, one or more input devices 822 are connected to the interface circuitry 820. The input device(s) 822 permit(s) a user to enter data and/or commands into the processor circuitry 812. The input device(s) 822 can be implemented by, for example, an audio sensor, a microphone, a camera (still or video), a keyboard, a button, a mouse, a touchscreen, a track-pad, a trackball, an isopoint device, and/or a voice recognition system.

One or more output devices 824 are also connected to the interface circuitry 820 of the illustrated example. The output devices 824 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 820 of the illustrated example, thus, typically includes a graphics driver card, a graphics driver chip, and/or graphics processor circuitry such as a GPU.

The interface circuitry 820 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 835. The communication can be by, for example, an Ethernet connection, a digital subscriber line (DSL) connection, a telephone line connection, a coaxial cable system, a satellite system, a line-of-site wireless system, a cellular telephone system, an optical connection, etc.

The processor platform 800 of the illustrated example also includes one or more mass storage devices 828 to store software and/or data. Examples of such mass storage devices 828 include magnetic storage devices, optical storage devices, floppy disk drives, HDDs, CDs, Blu-ray disk drives, redundant array of independent disks (RAID) systems, solid state storage devices such as flash memory devices, and DVD drives.

The machine executable instructions 830, which may be implemented by the machine readable instructions of FIG. 6, may be stored in the mass storage device 828, in the volatile memory 814, in the non-volatile memory 816, and/or on a removable non-transitory computer readable storage medium such as a CD or DVD.

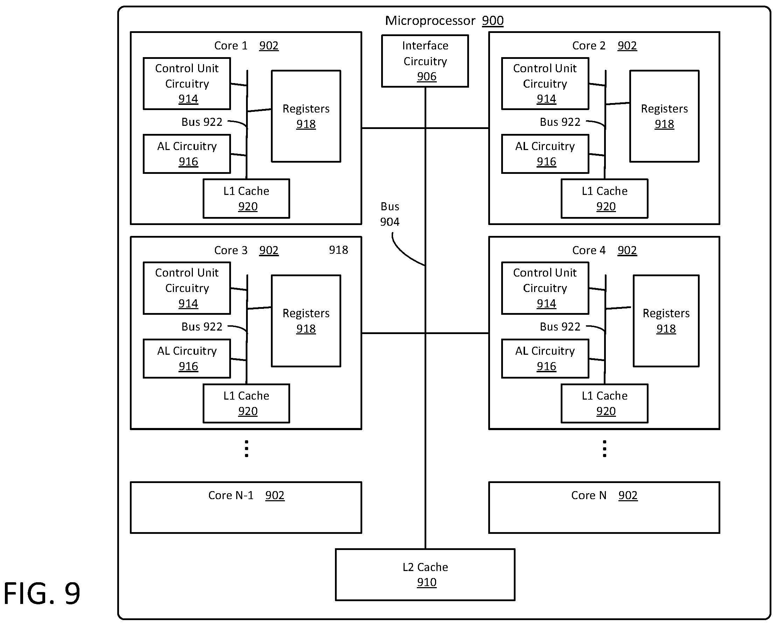

**FIG. 9** is a block diagram of an example implementation of processor circuitry. In this example, the processor circuitry is implemented by a microprocessor 900. For example, the microprocessor 900 may implement multi-core hardware circuitry such as a CPU, a DSP, a GPU, an XPU, etc. Although it may include any number of example cores 902 (e.g., 1 core), the microprocessor 900 of this example is a multi-core semiconductor device including N cores. The cores 902 of the microprocessor 900 may operate independently or may cooperate to execute machine readable instructions. For example, machine code corresponding to a firmware program, an embedded software program, or a software program may be executed by one of the cores 902 or may be executed by multiple ones of the cores 902 at the same or different times. In some examples, the machine code corresponding to the firmware program, the embedded software program, or the software program is split into threads and executed in parallel by two or more of the cores 902. The software program may correspond to a portion or all of the machine readable instructions and/or operations represented by the flowchart of FIG. 6.

The cores 902 may communicate by an example bus 904. In some examples, the bus 904 may implement a communication bus to effectuate communication associated with one(s) of the cores 902. For example, the bus 904 may implement at least one of an Inter-Integrated Circuit (I2C) bus, a Serial Peripheral Interface (SPI) bus, a PCI bus, or a PCIe bus. Additionally or alternatively, the bus 904 may implement any other type of computing or electrical bus. The cores 902 may obtain data, instructions, and/or signals from one or more external devices by example interface circuitry 906. The cores 902 may output data, instructions, and/or signals to the one or more external devices by the interface circuitry 906. Although the cores 902 of this example include example local memory 920 (e.g., Level 1 (L1) cache that may be split into an L1 data cache and an L1 instruction cache), the microprocessor 900 also includes example shared memory 910 that may be shared by the cores (e.g., Level 2 (L2) cache) for high-speed access to data and/or instructions. Data and/or instructions may be transferred (e.g., shared) by writing to and/or reading from the shared memory 910. The local memory 920 of each of the cores 902 and the shared memory 910 may be part of a hierarchy of storage devices including multiple levels of cache memory and the main memory. Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 902 may be referred to as a CPU, DSP, GPU, etc., or any other type of hardware circuitry. Each core 902 includes control unit circuitry 914, arithmetic and logic (AL) circuitry (sometimes referred to as an ALU) 916, a plurality of registers 918, the L1 cache 920, and an example bus 922. Other structures may be present. For example, each core 902 may include vector unit circuitry, single instruction multiple data (SIMD) unit circuitry, load/store unit (LSU) circuitry, branch/jump unit circuitry, floating-point unit (FPU) circuitry, etc. The control unit circuitry 914 includes semiconductor-based circuits structured to control (e.g., coordinate) data movement within the corresponding core 902. The AL circuitry 916 includes semiconductor-based circuits structured to perform one or more mathematic and/or logic operations on the data within the corresponding core 902. The AL circuitry 916 of some examples performs integer based operations. In other examples, the AL circuitry 916 also performs floating point operations. In yet other examples, the AL circuitry 916 may include first AL circuitry that performs integer based operations and second AL circuitry that performs floating point operations. In some examples, the AL circuitry 916 may be referred to as an Arithmetic Logic Unit (ALU). The registers 918 are semiconductor-based structures to store data and/or instructions such as results of one or more of the operations performed by the AL circuitry 916 of the corresponding core 902. For example, the registers 918 may include vector register(s), SIMD register(s), general purpose register(s), flag register(s), segment register(s), machine specific register(s), instruction pointer register(s), control register(s), debug register(s), memory management register(s), machine check register(s), etc. The registers 918 may be arranged in a bank as shown in FIG. 9. Alternatively, the registers 918 may be organized in any other arrangement, format, or structure including distributed throughout the core 902 to shorten access time. The bus 920 may implement at least one of an I2C bus, a SPI bus, a PCI bus, or a PCIe bus.

Each core 902 and/or, more generally, the microprocessor 900 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 900 is a semiconductor device fabricated to include many transistors interconnected to implement the structures described above in one or more integrated circuits (ICs) contained in one or more packages. The processor circuitry may include and/or cooperate with one or more accelerators. In some examples, accelerators are implemented by logic circuitry to perform certain tasks more quickly and/or efficiently than can be done by a general purpose processor. Examples of accelerators include ASICs and FPGAs such as those discussed herein. A GPU or other programmable device can also be an accelerator. Accelerators may be on-board the processor circuitry, in the same chip package as the processor circuitry and/or in one or more separate packages from the processor circuitry.

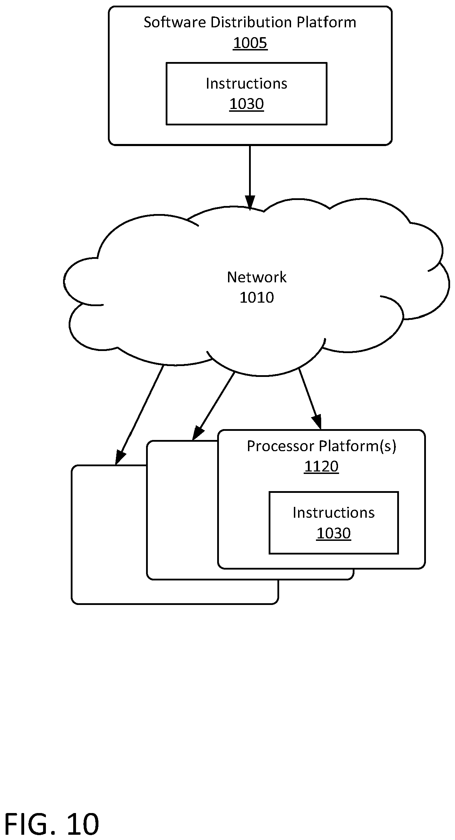

**FIG. 10** is a block diagram illustrating an example software distribution platform. The example software distribution platform 1005 may be implemented by any computer server, data facility, cloud service, etc., capable of storing and transmitting software to other computing devices. The third parties may be customers of the entity owning and/or operating the software distribution platform 1005. For example, the entity that owns and/or operates the software distribution platform 1005 may be a developer, a seller, and/or a licensor of software. The third parties may be consumers, users, retailers, OEMs (Original Equipment Manufacturers), etc., who purchase and/or license the software for use and/or re-sale and/or sub-licensing. In the illustrated example, the software distribution platform 1005 includes one or more servers and one or more storage devices. The storage devices store machine readable instructions 1030.

The one or more servers of the example software distribution platform 1005 are in communication with a network 1010, which may correspond to any one or more of the Internet or other network. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 1030 from the software distribution platform 1005 to processor platforms 1020. In some examples, one or more servers of the software distribution platform 1005 periodically offer, transmit, and/or force updates to the software to ensure improvements, patches, updates, etc., are distributed and applied to the software at the end user devices.

The following embodiments pertain to certain aspects of the invention:

An embodiment of the invention may relate to a method according to claim 1.

Another embodiment of the invention may include a non-transitory computer-readable storage medium according to claim 6.

In a further embodiment of the invention may include a non-transitory computer-readable storage medium wherein the daemon is an optional operation for users of the application.

Another embodiment of the invention may relate to an apparatus according to claim 9.

In a further embodiment of the invention the apparatus wherein the daemon is an optional operation for users of the Android application.

In a further embodiment of the invention the apparatus wherein the one or more user systems are mobile devices.

Another embodiment of the invention may relate to an apparatus including means for receiving code at a platform for an application; means for running the application; means for accessing runtime layer data for the application; means for generating static diagnostic and advisory data based on the runtime layer data, and storing the generated static diagnostic and advisory data in a diagnostic and advisory database; means for receiving dynamic runtime information for the application from operation on one or more user systems; and means for generating dynamic diagnostic and advisory information based on the received dynamic runtime information, and storing the generated dynamic diagnostic and advisory data in the diagnostic and advisory database.

In a further embodiment of the invention the apparatus wherein the application is an Android application.

In a further embodiment of the invention the apparatus wherein the apparatus further includes means for providing access to the static and dynamic diagnostic and advisory data in the diagnostic and advisory database to a developer of the application.

In a further embodiment of the invention the apparatus wherein accessing the runtime layer data for the application includes accessing data for development of the application and data for building a software stack.

In a further embodiment of the invention the apparatus wherein dynamic runtime information for the application is generated by a daemon running on each of the one or more user systems.

In a further embodiment of the invention the apparatus wherein the daemon is an optional operation for users of the application.

In the description above, for the purposes of explanation, numerous specific details are set forth in order to provide a thorough understanding of the described embodiments. It will be apparent, however, to one skilled in the art that embodiments may be practiced without some of these specific details. In other instances, well-known structures and devices are shown in block diagram form. There may be intermediate structure between illustrated components. The components described or illustrated herein may have additional inputs or outputs that are not illustrated or described.

Various embodiments may include various processes. These processes may be performed by hardware components or may be embodied in computer program or machine-executable instructions, which may be used to cause a general-purpose or special-purpose processor or logic circuits programmed with the instructions to perform the processes. Alternatively, the processes may be performed by a combination of hardware and software.

Portions of various embodiments may be provided as a computer program product, which may include a computer-readable medium having stored thereon computer program instructions, which may be used to program a computer (or other electronic devices) for execution by one or more processors to perform a process according to certain embodiments. The computer-readable medium may include, but is not limited to, magnetic disks, optical disks, read-only memory (ROM), random access memory (RAM), erasable programmable read-only memory (EPROM), electrically-erasable programmable read-only memory (EEPROM), magnetic or optical cards, flash memory, or other type of computer-readable medium suitable for storing electronic instructions. Moreover, embodiments may also be downloaded as a computer program product, wherein the program may be transferred from a remote computer to a requesting computer.

Many of the methods are described in their most basic form, but processes can be added to or deleted from any of the methods and information can be added or subtracted from any of the described messages without departing from the basic scope of the present embodiments. It will be apparent to those skilled in the art that many further modifications and adaptations can be made. The particular embodiments are not provided to limit the concept but to illustrate it. The scope of the embodiments is not to be determined by the specific examples provided above but only by the claims below.

If it is said that an element "A" is coupled to or with element "B," element A may be directly coupled to element B or be indirectly coupled through, for example, element C. When the specification or claims state that a component, feature, structure, process, or characteristic A "causes" a component, feature, structure, process, or characteristic B, it means that "A" is at least a partial cause of "B" but that there may also be at least one other component, feature, structure, process, or characteristic that assists in causing "B." If the specification indicates that a component, feature, structure, process, or characteristic "may", "might", or "could" be included, that particular component, feature, structure, process, or characteristic is not required to be included. If the specification or claim refers to "a" or "an" element, this does not mean there is only one of the described elements.

An embodiment is an implementation or example. Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. It should be appreciated that in the foregoing description of exemplary embodiments, various features are sometimes grouped together in a single embodiment, figure, or description thereof for the purpose of streamlining the disclosure and aiding in the understanding of one or more of the various novel aspects. This method of disclosure, however, is not to be interpreted as reflecting an intention that the claimed embodiments requires more features than are expressly recited in each claim. Rather, as the following claims reflect, novel aspects lie in less than all features of a single foregoing disclosed embodiment. Thus, the claims are hereby expressly incorporated into this description, with each claim standing on its own as a separate embodiment.

## Claims

1. A method comprising:
receiving code at a platform for an application (605), wherein the application is an Android application;
running the application (610);
accessing runtime layer data for the application (615);
wherein the runtime layer data includes internal runtime information from a binary object file of an Android runtime layer;
generating static diagnostic and advisory data based on the runtime layer data (620), and storing the generated static diagnostic and advisory data in a diagnostic and advisory database (625);
receiving dynamic runtime information, generated based upon reading in-memory binary object file segments and library details, for the application from operation of the application on one or more user systems (630);
generating dynamic diagnostic and advisory information based on the received dynamic runtime information (635), and storing the generated dynamic diagnostic and advisory data in the diagnostic and advisory database; and
wherein dynamic runtime information for the application is generated by a daemon running on each of the one or more user systems,
using the static and dynamic diagnostic and advisory data to recompile the application.

2. The method of claim 1, further comprising one or more of:
providing access to the static and dynamic diagnostic and advisory data in the diagnostic and advisory database (240) to a developer of the application; or
combining the runtime layer data with other runtime data.

3. The method of claim 1, wherein accessing the runtime layer data for the application includes accessing data for development of the application and data for building a software stack.

4. The method of claim 1, wherein the daemon is an optional operation for users of the application.

5. The method of claim 1, wherein the one or more user systems are mobile devices.

6. A non-transitory computer-readable storage medium comprising instructions that, when executed by at least one processor, cause the at least one processor to:
receive code at a platform for an application (605), wherein the application is an Android application;
run the application (610);
access runtime layer data for the application (615);
wherein the runtime layer data includes internal runtime information from a binary object file of an Android runtime layer;
generate static diagnostic and advisory data based on the runtime layer data (620), and store the generated static diagnostic and advisory data in a diagnostic and advisory database (625);
receive dynamic runtime information, generated based upon reading in-memory binary object file segments and library details, for the application from operation on one or more user systems (630);
generate dynamic diagnostic and advisory information based on the received dynamic runtime information (635), and store the generated dynamic diagnostic and advisory data in the diagnostic and advisory database (640); and
wherein dynamic runtime information for the application is generated by a daemon running on each of the one or more user systems,
using the static and dynamic diagnostic and advisory data to recompile the application.

7. The computer-readable storage medium of claim 6, wherein the instructions further include instructions that, when executed by at the least one processor, cause the at least one processor to provide access to the static and dynamic diagnostic and advisory data in the diagnostic and advisory database to a developer of the application.

8. The computer-readable storage medium of claim 6, wherein accessing the runtime layer data for the application includes accessing data for development of the application and data for building a software stack.

9. An apparatus comprising:
one or more processors including processor circuitry;
a computer memory device for storage of computer instructions; and
a storage device to store data including a diagnostic and advisory database;
wherein the one or more processors are configured to:
receive code at a platform for an Android application;
run the Android application;
access Android runtime layer data for the Android application;
wherein the runtime layer data includes internal runtime information from a binary object file of an Android runtime layer;
generate static diagnostic and advisory data based on the Android runtime layer data, and store the generated static diagnostic and advisory data in the diagnostic and advisory database;
receive dynamic runtime information, generated based upon reading in-memory binary object file segments and library details, for the Android application from operation of the Android application on one or more user systems; and
generate dynamic diagnostic and advisory information based on the received dynamic runtime information, and storing the generated dynamic diagnostic and advisory data in the diagnostic and advisory database; and
wherein the dynamic runtime information for the Android application is generated by a daemon running on each of the one or more user systems,
using the static and dynamic diagnostic and advisory data to recompile the application.

10. The apparatus of claim 9, wherein the one or more processors are further to provide access to the static and dynamic diagnostic and advisory data in the diagnostic and advisory database to a developer of the Android application.

11. The apparatus of claim 9, wherein accessing the Android runtime layer data for the application includes accessing data for development of the Android application and data for building an Android stack.

## Patentansprüche

1. Verfahren, das Folgendes umfasst:
Empfangen von Code auf einer Plattform für eine Anwendung (605), wobei die Anwendung eine Android-Anwendung ist; Ausführen der Anwendung (610);
Zugreifen auf Laufzeitschichtdaten für die Anwendung (615);
wobei die Laufzeitschichtdaten interne Laufzeitinformationen aus einer binären Objektdatei einer Android-Laufzeitschicht enthalten;
Erzeugen von statischen Diagnose- und Beratungsdaten basierend auf den Laufzeitschichtdaten (620), und Speichern der erzeugten statischen Diagnose- und Beratungsdaten in einer Diagnose- und Beratungsdatenbank (625);
Empfangen von dynamischen Laufzeitinformationen, die auf der Grundlage des Einlesens von binären Objektdatensegmenten und Bibliotheksdetails im Speicher erzeugt werden, für die Anwendung aus der Operation der Anwendung auf einem oder mehreren Benutzersystemen (630);
Erzeugen von dynamischen Diagnose- und Beratungsinformationen basierend auf den empfangenen dynamischen Laufzeitinformationen (635), und Speichern der erzeugten dynamischen Diagnose- und Beratungsdaten in der Diagnose- und Beratungsdatenbank; und
wobei dynamische Laufzeitinformationen für die Anwendung von einem Daemon erzeugt werden, der auf jedem der ein oder mehreren Benutzersysteme läuft, wobei die statischen und dynamischen Diagnose- und Beratungsdaten verwendet werden, um die Anwendung neu zu kompilieren.

2. Verfahren nach Anspruch 1, das ferner einen oder mehrere der folgenden Punkte umfasst:
Bereitstellen des Zugriffs auf die statischen und dynamischen Diagnose- und Beratungsdaten in der Diagnose- und Beratungsdatenbank (240) für einen Entwickler der Anwendung; oder
Kombinieren der Laufzeitschichtdaten mit anderen Laufzeitdaten.

3. Verfahren nach Anspruch 1, wobei der Zugriff auf die Laufzeitschichtdaten für die Anwendung den Zugriff auf Daten für die Entwicklung der Anwendung und Daten für den Aufbau eines Software-Stacks beinhaltet.

4. Verfahren nach Anspruch 1, wobei der Daemon eine optionale Operation für Benutzer der Anwendung ist.

5. Verfahren nach Anspruch 1, wobei das eine oder die mehreren Benutzersysteme mobile Vorrichtungen sind.

6. Nichtflüchtiges computerlesbares Speichermedium, das Anweisungen umfasst, die, wenn sie von mindestens einem Prozessor ausgeführt werden, den mindestens einen Prozessor zu Folgendem veranlassen:
Empfangen von Code auf einer Plattform für eine Anwendung (605), wobei die Anwendung eine Android-Anwendung ist; Ausführen der Anwendung (610);
Zugreifen auf Laufzeitschichtdaten für die Anwendung (615);
wobei die Laufzeitschichtdaten interne Laufzeitinformationen aus einer binären Objektdatei einer Android-Laufzeitschicht enthalten;
Erzeugen von statischen Diagnose- und Beratungsdaten basierend auf den Laufzeitschichtdaten (620), und Speichern der erzeugten statischen Diagnose- und Beratungsdaten in einer Diagnose- und Beratungsdatenbank (625);
Empfangen von dynamischen Laufzeitinformationen, die auf der Grundlage des Einlesens von binären Objektdatensegmenten und Bibliotheksdetails im Speicher erzeugt werden, für die Anwendung aus der Operation auf einem oder mehreren Benutzersystemen (630);
Erzeugen von dynamischen Diagnose- und Beratungsinformationen basierend auf den empfangenen dynamischen Laufzeitinformationen (635), und Speichern der erzeugten dynamischen Diagnose- und Beratungsdaten in der Diagnose- und Beratungsdatenbank (640); und
wobei dynamische Laufzeitinformationen für die Anwendung von einem Daemon erzeugt werden, der auf jedem der ein oder mehreren Benutzersysteme läuft, wobei die statischen und dynamischen Diagnose- und Beratungsdaten verwendet werden, um die Anwendung neu zu kompilieren.

7. Computerlesbares Speichermedium nach Anspruch 6, wobei die Anweisungen ferner Anweisungen enthalten, die, wenn sie von mindestens einem Prozessor ausgeführt werden, den mindestens einen Prozessor veranlassen, einem Entwickler der Anwendung Zugriff auf die statischen und dynamischen Diagnose- und Beratungsdaten in der Diagnose- und Beratungsdatenbank bereitzustellen.

8. Computerlesbares Speichermedium nach Anspruch 6, wobei der Zugriff auf die Laufzeitschichtdaten für die Anwendung den Zugriff auf Daten für die Entwicklung der Anwendung und Daten für den Aufbau eines Software-Stacks beinhaltet.

9. Vorrichtung, die Folgendes umfasst:
einen oder mehrere Prozessoren, die eine Prozessorschaltung enthalten;
eine Computerspeichervorrichtung zur Speicherung von Computeranweisungen; und
eine Speichervorrichtung zum Speichern von Daten einschließlich einer Diagnose- und Beratungsdatenbank;
wobei der eine oder die mehreren Prozessoren für Folgendes ausgelegt sind:
Empfangen von Code auf einer Plattform für eine Android-Anwendung;
Ausführen der Android-Anwendung;
Zugreifen auf die Android-Laufzeitschichtdaten für die Android-Anwendung;
wobei die Laufzeitschichtdaten interne Laufzeitinformationen aus einer binären Objektdatei einer Android-Laufzeitschicht enthalten;
Erzeugen von statischen Diagnose- und Beratungsdaten basierend auf den Android-Laufzeitschichtdaten, und Speichern der erzeugten statischen Diagnose- und Beratungsdaten in der Diagnose- und Beratungsdatenbank;
Empfangen von dynamischen Laufzeitinformationen, die auf der Grundlage des Einlesens von binären Objektdatensegmenten und Bibliotheksdetails im Speicher erzeugt werden, für die Android-Anwendung aus der Operation der Android-Anwendung auf einem oder mehreren Benutzersystemen; und
Erzeugen von dynamischen Diagnose- und Beratungsinformationen basierend auf den empfangenen dynamischen Laufzeitinformationen, und Speichern der erzeugten dynamischen Diagnose- und Beratungsdaten in der Diagnose- und Beratungsdatenbank; und
wobei die dynamischen Laufzeitinformationen für die Android-Anwendung von einem Daemon erzeugt werden, der auf jedem der ein oder mehreren Benutzersysteme läuft, wobei die statischen und dynamischen Diagnose- und Beratungsdaten verwendet werden, um die Anwendung neu zu kompilieren.

10. Vorrichtung nach Anspruch 9, wobei der eine oder die mehreren Prozessoren ferner dazu dienen, einem Entwickler der Android-Anwendung den Zugriff auf die statischen und dynamischen Diagnose- und Beratungsdaten in der Diagnose- und Beratungsdatenbank bereitzustellen.

11. Vorrichtung nach Anspruch 9, wobei der Zugriff auf die Android-Laufzeitschichtdaten für die Anwendung den Zugriff auf Daten für die Entwicklung der Android-Anwendung und Daten für den Aufbau eines Android-Stacks beinhaltet.

## Revendications

1. Procédé, comprenant :
la réception d'un code au niveau d'une plateforme pour une application (605), l'application étant une application Android ;
l'exécution de l'application (610) ;
l'accès à des données de couche d'exécution pour l'application (615) ;
les données de couche d'exécution comportant des informations d'exécution internes issues d'un fichier objet binaire d'une couche d'exécution Android ;
la génération de données de diagnostic et de conseil statiques sur la base des données de couche d'exécution (620), et le stockage des données de diagnostic et de conseil statiques générées dans une base de données de diagnostic et de conseil (625) ;
la réception d'informations d'exécution dynamiques, générées sur la base de la lecture de segments de fichier objet binaire en mémoire et de détails sur une bibliothèque, pour l'application à partir du fonctionnement de l'application sur un ou plusieurs systèmes utilisateurs (630) ;
la génération de données de diagnostic et de conseil dynamiques sur la base des informations d'exécution dynamiques reçues (635), et le stockage des données de diagnostic et de conseil dynamiques générées dans la base de données de diagnostic et de conseil ; et
les informations d'exécution dynamiques pour l'application étant générées par un démon s'exécutant sur chacun des un ou plusieurs systèmes utilisateurs, les données de diagnostic et de conseil statiques et dynamiques étant utilisées pour recompiler l'application.

2. Procédé selon la revendication 1, comportant en outre :
la fourniture, à un développeur de l'application, d'un accès aux données de diagnostic et de conseil statiques et dynamiques dans la base de données de diagnostic et de conseil (240) ; et/ou
la combinaison des données de couche d'exécution avec d'autres données d'exécution.

3. Procédé selon la revendication 1, l'accès aux données de couche d'exécution pour l'application comportant l'accès à des données pour le développement de l'application et à des données pour l'élaboration d'une pile logicielle.

4. Procédé selon la revendication 1, le démon étant une opération optionnelle pour des utilisateurs de l'application.

5. Procédé selon la revendication 1, les un ou plusieurs systèmes utilisateurs étant des dispositifs mobiles.

6. Support de stockage non transitoire lisible par ordinateur comprenant des instructions qui, lorsqu'elles sont exécutées par au moins un processeur, amènent l'au moins un processeur à :
recevoir un code au niveau d'une plateforme pour une application (605), l'application étant une application Android ;
exécuter l'application (610) ;
accéder à des données de couche d'exécution pour l'application (615) ;
les données de couche d'exécution comportant des informations d'exécution internes issues d'un fichier objet binaire d'une couche d'exécution Android ;
générer des données de diagnostic et de conseil statiques sur la base des données de couche d'exécution (620), et stocker les données de diagnostic et de conseil statiques générées dans une base de données de diagnostic et de conseil (625) ;
recevoir des informations d'exécution dynamiques, générées sur la base de la lecture de segments de fichier objet binaire en mémoire et de détails sur une bibliothèque, pour l'application à partir du fonctionnement sur un ou plusieurs systèmes utilisateurs (630) ;
générer des données de diagnostic et de conseil dynamiques sur la base des informations d'exécution dynamiques reçues (635), et stocker les données de diagnostic et de conseil dynamiques générées dans la base de données de diagnostic et de conseil (640) ; et
les informations d'exécution dynamiques pour l'application étant générées par un démon s'exécutant sur chacun des un ou plusieurs systèmes utilisateurs, les données de diagnostic et de conseil statiques et dynamiques étant utilisées pour recompiler l'application.

7. Support de stockage lisible par ordinateur selon la revendication 6, les instructions comportant en outre des instructions qui, lorsqu'elle sont exécutées par au moins un processeur, amènent l'au moins un processeur à fournir, à un développeur de l'application, un accès aux données de diagnostic et de conseil statiques et dynamiques dans la base de données de diagnostic et de conseil.

8. Support de stockage lisible par ordinateur selon la revendication 6, l'accès aux données de couche d'exécution pour l'application comportant l'accès à des données pour le développement de l'application et à des données pour l'élaboration d'une pile logicielle.

9. Appareil, comprenant :
un ou plusieurs processeurs comprenant une circuiterie de processeur ;
un dispositif de mémoire d'ordinateur pour le stockage d'instructions d'ordinateur ; et
un dispositif de stockage pour stocker des données comportant une base de données de diagnostic et de conseil ;
les un ou plusieurs processeurs étant configurés pour :
recevoir un code au niveau d'une plateforme pour une application Android ;
exécuter l'application Android ;
accéder à des données de couche d'exécution Android pour l'application Android ;
les données de couche d'exécution comportant des informations d'exécution internes issues d'un fichier objet binaire d'une couche d'exécution Android ;
générer des données de diagnostic et de conseil statiques sur la base des données de couche d'exécution Android, et stocker les données de diagnostic et de conseil statiques générées dans une base de données de diagnostic et de conseil ;
recevoir des informations d'exécution dynamiques, générées sur la base de la lecture de segments de fichier objet binaire en mémoire et de détails sur une bibliothèque, pour l'application Android à partir du fonctionnement de l'application Android sur un ou plusieurs systèmes utilisateurs ; et
générer des données de diagnostic et de conseil dynamiques sur la base des informations d'exécution dynamiques reçues, et stocker les données de diagnostic et de conseil dynamiques générées dans la base de données de diagnostic et de conseil ; et
les informations d'exécution dynamiques pour l'application Android étant générées par un démon s'exécutant sur chacun des un ou plusieurs systèmes utilisateurs, les données de diagnostic et de conseil statiques et dynamiques étant utilisées pour recompiler l'application.

10. Appareil selon la revendication 9, les un ou plusieurs processeurs étant en outre destinés à fournir, à un développeur de l'application Android, un accès aux données de diagnostic et de conseil statiques et dynamiques dans la base de données de diagnostic et de conseil.

11. Appareil selon la revendication 9, l'accès aux données de couche d'exécution Android pour l'application comportant l'accès à des données pour le développement de l'application Android et à des données pour l'élaboration d'une pile Android.
